(19) Europäisches Patentamt
European Patent Office
Office européen des brevets

(11) **EP 2 383 980 A1**

(12) **DEMANDE DE BREVET EUROPEEN**

(43) Date de publication:
**02.11.2011 Bulletin 2011/44**

(51) Int Cl.:
**H04N 5/335** (2011.01)

(21) Numéro de dépôt: **11156874.7**

(22) Date de dépôt: **03.03.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **11.03.2010 FR 1000976**

(71) Demandeur: **STmicroelectronics SA**
**92120 Montrouge (FR)**

(72) Inventeur: **Deschamps, Benoît**
**38360, SASSENAGE (FR)**

(74) Mandataire: **de Roquemaurel, Bruno et al**
**OMNIPAT**
**24 Place des Martyrs de la Résistance**
**13100 Aix en Provence (FR)**

(54) **Capteur d'image de type CMOS ayant une dynamique linéaire étendue**

(57)    L'invention concerne un procédé de commande d'une cellule de pixel (PXL) d'un capteur d'image (IS) de type CMOS, comprenant des étapes consistant à : initialiser des noeuds de capture (SN) et de lecture (RN) d'une cellule de pixel, transférer partiellement des charges électriques accumulées au noeud de capture vers le noeud de lecture, évacuer totalement les charges au noeud de lecture, transférer partiellement des charges électriques accumulées au noeud de capture vers le noeud de lecture, mesurer les charges électriques au noeud de lecture pour obtenir une tension de pixel (SPS) correspondant à une quantité de charges électriques accumulées pendant une période d'intégration courte (TS), transférer totalement les charges électriques au noeud de capture vers le noeud de lecture, sans initialisation préalable du noeud de lecture, et mesurer les charges électriques au noeud de lecture pour obtenir une tension de pixel (LPS+SPS) correspondant aux charges électriques accumulées pendant les périodes d'intégration courte (TS) et longue (TL).

Fig. 5

EP 2 383 980 A1

**EP 2 383 980 A1**

## Description

La présente invention concerne un capteur d'image, notamment du type CMOS, tel que ceux équipant les appareils photo numériques, les caméras numériques et les téléphones mobiles. La présente invention concerne en particulier des circuits pour lire et amplifier des signaux fournis par des éléments photosensibles du capteur d'image.

D'une manière classique, un capteur d'image de type CMOS comprend des cellules de pixels disposées en lignes de pixel et en colonnes de pixel transversales aux lignes de pixel. Chaque cellule de pixel est formée dans un substrat semi-conducteur et comprend un composant photosensible tel qu'une photodiode, associé à un circuit de lecture. Le circuit de lecture comprend au moins un transistor pour transférer une charge accumulée dans une région d'accumulation de charge du substrat, appelée dans ce qui suit "noeud de capture", où est formé le composant photosensible, vers un noeud de lecture, et un transistor pour réinitialiser le noeud de lecture à une certaine valeur de charge avant de procéder à un nouveau transfert de charge à partir du noeud de capture. Le capteur d'image comprend également un circuit de commande du circuit de lecture de chaque pixel, qui contrôle notamment l'obturation (electronic shutter), et un circuit de traitement du signal de pixel pour traiter le signal fourni par le circuit de lecture.

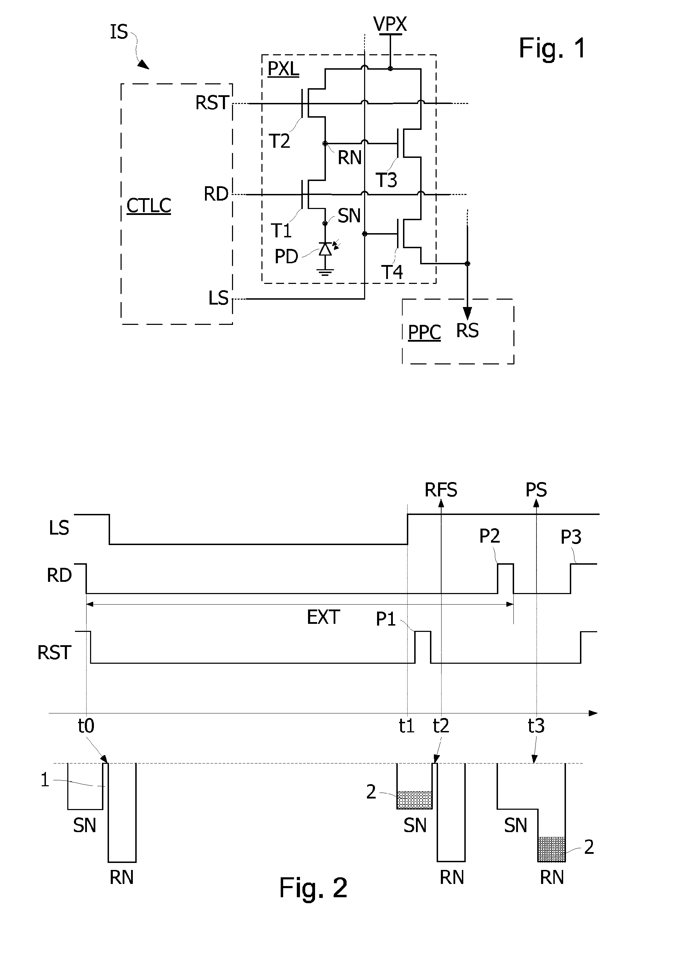

La figure 1 représente schématiquement un capteur d'image de type CMOS. Le capteur d'image comprend classiquement des cellules de pixels arrangées en lignes de pixels et en colonnes de pixels transversales aux lignes de pixels. Par souci de clarté, la figure 1 ne représente qu'une seule cellule de pixel PXL. Le capteur d'image IS comprend également un circuit de commande CTLC des cellules de pixels et un circuit de traitement du signal PPC fourni par chaque cellule de pixel. Le capteur d'image IS représenté sur la figure 1 est du type à quatre transistors par cellule de pixel. Ainsi, chaque cellule de pixel PXL du capteur d'image IS comprend quatre transistors à canal n T1, T2, T3, T4 et une photodiode PD dont une borne d'anode est connectée à la masse. Le transistor T1 comprend une borne de source connectée à une borne de cathode de la photodiode PD et constituant un noeud de capture SN, une borne de drain connectée à une borne de source du transistor T2 et constituant un noeud de lecture RN, et une borne de grille recevant un signal de commande de lecture RD. Le transistor T2 comprend une borne de drain recevant une tension d'alimentation de pixel VPX et une borne de grille recevant un signal de réinitialisation RST. Le transistor T3 comprend une borne de grille connectée au noeud de lecture RN, une borne de drain recevant la tension d'alimentation VPX et une borne de source connectée à une borne de drain du transistor T4. Le transistor T4 comprend une borne de grille recevant un signal de sélection de colonne LS et une borne de source fournissant un signal de pixel RS. Par ailleurs, la grille du transistor T1 et la grille du transistor T2 de chacune des cellules de pixel d'une même ligne de pixel reçoivent respectivement un même signal RD et un même signal RST. La grille du transistor T4 de chacune des cellules de pixels d'une même ligne de pixel reçoit un même signal LS. La source du transistor T4 de chacune des cellules de pixel d'une même colonne de pixel est connectée à une sortie unique fournissant le signal de pixel RS.

La figure 2 représente des chronogrammes des signaux de commande RD, RST et LS appliqués à chaque cellule de pixel PXL par le circuit CTLC durant un cycle de lecture. La figure 2 représente également des charges accumulées aux noeuds de capture SN et de lecture RN à différents instants. Les noeuds SN et RN sont représentés sous la forme de réservoirs séparés par une barrière 1 formée par le transistor T1.

La commande d'une cellule de pixel comprend classiquement quatre instants particuliers t0, t1, t2, t3. Avant l'instant t0, les charges électriques accumulées par la photodiode PD au noeud de capture SN ont été transmises au noeud de lecture RN sous l'effet du passage à 1 du signal RD commandant le transistor T1 à l'état passant, et les charges au noeud RN ont été évacuées vers la source d'alimentation en commandant le transistor T2 à l'état passant à l'aide du signal RST mis à 1. L'instant t0 apparaît lorsque le signal RD passe à 0, bloquant le transistor T1, et lorsque les noeuds de capture SN et de lecture RN sont vides de charges électriques. L'instant t0 marque ainsi le début d'une période d'intégration (ou temps d'exposition) EXT pendant laquelle la photodiode PD exposée à la lumière, accumule des charges électrique au noeud de capture SN. L'instant t1 marque le début d'une phase de lecture. Cet instant apparaît lors du passage à 1 du signal LS, et est suivi d'une impulsion P1 dans le signal RST permettant de s'assurer que le noeud de lecture RN est vide de toute charge électrique. L'impulsion P1 est suivie d'une lecture à l'instant t2 de la tension du signal de pixel RS fournissant une tension de référence RFS correspondant à une absence d'éclairage de la diode PD. La tension RFS est utilisée pour initialiser un convertisseur analogique/numérique du circuit PPC, fournissant des échantillons numérisés d'un signal d'image. A l'instant t2, des charges électriques se sont accumulées au noeud de capture SN depuis le début de la période d'intégration EXT. L'instant P2 est suivi d'une impulsion P2 dans le signal RD. L'impulsion P2 a pour effet de rendre passant le transistor T1 (effacement de la barrière 1) et donc de transférer les charges 2 accumulées au noeud SN vers le noeud RN. L'instant t3 se produisant à la suite de l'émission de l'impulsion P2 marque l'instant de lecture de la tension du signal RS fournissant une tension PS correspondant aux charges électriques 2 présentes au noeud RN. L'instant t3 est suivi d'une impulsion P3 du signal RST permettant d'évacuer vers l'alimentation les charges se trouvant au noeud RN, correspondant à l'instant t0.

En raison de la miniaturisation croissante des capteurs d'image et donc des cellules de pixel, les charges susceptibles d'être accumulées par les photodiodes sont de plus en plus faibles et la saturation du noeud de capture se produit avec une quantité de lumière d'exposition de plus en plus faible. Il en résulte donc une réduction de la dynamique (dynamic range) d'un pixel, c'est-à-dire la gamme d'éclairement qu'un pixel du capteur d'image est capable de discriminer. Pour éviter cet inconvénient, et donc pour étendre la dynamique de sensibilité d'un capteur d'image de type CMOS, dans certaines conditions d'éclairement du capteur d'image, il a été proposé, notamment dans le brevet US 7 586 523, de mettre en oeuvre deux périodes d'intégration et de lire deux signaux de pixel correspondant à ces deux périodes d'intégration dans un mode à dynamique étendue.

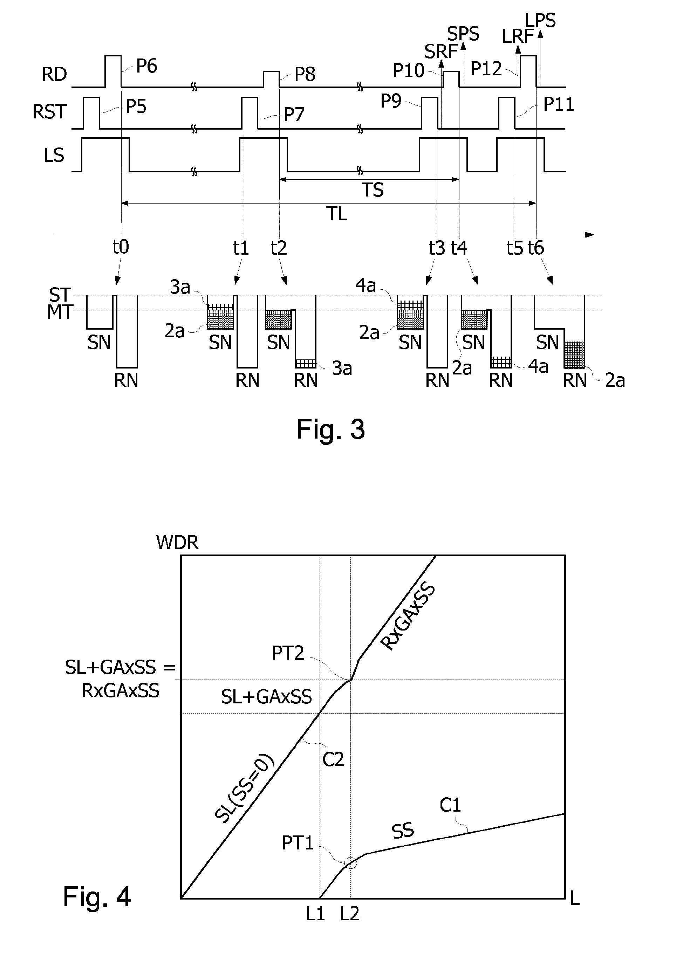

La mise en oeuvre de deux périodes d'intégration est illustrée par la figure 3 qui représente des chronogrammes des signaux de commande RD, RST et LS appliqués à chaque cellule de pixel PXL de la figure 1. La figure 3 représente également les charges accumulées aux noeuds de capture SN et de lecture RN à différents instants durant un cycle de lecture de la cellule de pixel PXS.

Sur la figure 3, la commande d'une cellule de pixel comprend sept instants particuliers successifs t0, t1, t2, t3, t4, t5, t6 dans un mode de dynamique étendue. Avant l'instant t0, le noeud de lecture RN est initialisé en évacuant les charges électriques accumulées au noeud RN vers la source d'alimentation VPX, par le passage à l'état passant du transistor T2 commandé par une impulsion P5 du signal RST. Les charges électriques accumulées par la photodiode PD au noeud de capture SN sont ensuite transférées vers le noeud de lecture RN sous l'effet d'une impulsion P6 du signal RD commandant le transistor T1 à l'état passant. A l'instant t0, le signal RD passe à 0, bloquant le transistor T1, et le noeud de capture SN est vide de charges électriques. L'instant t0 marque ainsi le début d'une période d'intégration longue TL pendant laquelle la photodiode PD peut accumuler des charges électriques 2a, 3a au noeud de capture SN sous l'effet de la lumière. L'instant t1 correspond à l'apparition d'une impulsion P7 dans le signal RST. L'impulsion P7 commande l'initialisation du noeud de lecture RN. L'instant t2, correspond à l'apparition d'une impulsion P8 dans le signal RD. L'impulsion P8 présente une intensité inférieure à l'impulsion P6, par exemple de l'ordre de la moitié de l'intensité de l'impulsion P6, de manière à abaisser partiellement la barrière 1 formée par le transistor T1, et à ne transférer du noeud de capture SN vers le noeud de lecture RN que des charges électriques 3a excédant un certain seuil MT. Le seuil MT est ainsi défini par l'intensité de l'impulsion P8. Les charges 3a sont évacuées vers l'alimentation lors d'une impulsion P9 du signal RST initialisant le noeud RN, l'impulsion P9 étant émise avant l'instant t3. Les impulsions P8 et P9 permettent donc d'effectuer une opération d'écrêtage (skimming) des charges accumulées au noeud SN. L'instant t2 marque également le début d'une période d'intégration courte TS. A l'instant t3, juste après l'impulsion P9, une lecture de la tension du signal de pixel RS est effectuée pour disposer d'une tension de référence SRF correspondant à une absence d'éclairage de la diode PD. La tension SRF est utilisée pour initialiser le convertisseur analogique/numérique fournissant des échantillons numérisés du signal d'image, lors de la détermination d'un signal de pixel "court" résultant de la période d'intégration courte TS. La lecture de la tension SRF est suivie d'une impulsion P10 du signal RD ayant une intensité analogue à celle de l'impulsion P8, permettant de transférer le cas échéant des charges électriques 4a excédant le seuil MT du noeud SN vers le noeud RN. L'instant t4 se produisant à la suite de l'émission de l'impulsion P10, marque la fin de la période d'intégration courte TS et l'instant de lecture de la tension du signal RS fournissant un signal de pixel "court" SPS correspondant aux charges électriques 4a transférées au noeud RN et accumulées durant la période d'intégration courte TS. L'instant t4 est suivi d'une impulsion P11 du signal RST à l'instant t5, permettant d'évacuer les charges 4a pouvant se trouver au noeud RN. Juste après l'impulsion P11, une lecture de la tension du signal de pixel RS est effectuée pour disposer d'une tension de référence LRF correspondant à une absence d'éclairage de la diode PD. La tension LRF permet d'initialiser le convertisseur analogique/numérique, lors de la détermination d'un signal de pixel "long" résultant de la période d'intégration longue TL. La lecture de la tension LRF est suivie d'une impulsion P12 du signal RD ayant une intensité analogue à celle de l'impulsion P6, pour transférer toutes les charges électriques présentes au noeud SN vers le noeud RN. L'instant t6 se produisant à la suite de l'émission de l'impulsion P12, marque la fin de la période d'intégration longue TL et l'instant de lecture de la tension du signal RS fournissant un signal de pixel "long" LPS correspondant aux charges électriques 2a transférées au noeud RN et accumulées durant la période d'intégration longue TL.

Le capteur d'image décrit dans le brevet US 7 586 523 fournit ensuite une valeur de pixel à dynamique étendue en appliquant la formule suivante :

$$WDR = MAX(LS + SS \times GA \,,\, SS \times GA \times R) \qquad (1)$$

dans laquelle MAX(a, b) est une fonction fournissant la plus grande des valeurs a et b, LS et SS sont des échantillons numérisés des signaux LPS et SPS, GA est un coefficient pouvant être égal à 1, et R = TL/TS est le rapport des durées d'intégration longue TL et courte TS.

La figure 4 représente deux courbes C1, C2 de variation des signaux SS et WDR en fonction de l'intensité d'éclairement de la diode PD. D'après la courbe C1, le signal SS devient non nul à partir d'une certaine valeur d'intensité d'éclairement correspondant au seuil MT. La courbe C1 présente ensuite une partie sensiblement linéaire reliée à une autre partie linéaire de moindre pente, par une partie courbe au voisinage d'un point PT1. La courbe C2 présente une première partie sensiblement linéaire s'étendant de l'origine du repère où le signal WDR est nul lorsque l'éclairement de la diode PD est nul, jusqu'à un point ayant une intensité d'éclairement égale à L1 au point de début de la courbe C1. Dans cette première partie, le signal WDR est égal au signal SL, le signal SS étant nul. La courbe C2 comprend une seconde partie s'étendant entre la première partie de la courbe C2 et un point PT2, où le signal WDR est égal SL+GAxSS pour une intensité d'éclairement L2, c'est-à-dire lorsque la condition SL+GAxSS > GAxRxSS est réalisée. La courbe C2 comprend une troisième partie s'étendant au delà du point PT2, où le signal WDR est égal à GAxRxSS, c'est-à-dire lorsque la condition SL+GAxSS < GAxRxSS est réalisée. A une certaine distance du point PT2, les première et troisième parties de la courbe C2 présentent une pente sensiblement identique, correspondant à une zone de fonctionnement sensiblement linéaire.

Il s'avère que la mise en oeuvre de la formule (1) induit des problèmes de linéarité du signal au voisinage du point PT2 où les valeurs LS + SS x GA et SS x GA x R sont voisines, en raison notamment de présence de la partie courbe de la courbe C1 au voisinage du point PT1. L'écart entre une droite ayant la pente des première et troisième partie et la courbe C2 peut ainsi atteindre 12 à 15%. Dans le brevet US 7 586 523, on a tenté de réduire cette non linéarité par un ajustement du coefficient GA ou par l'utilisation de plusieurs coefficients appliqués au signal SS selon qu'il est ajouté au signal SL ou multiplié par le ratio R. Or ces opérations entraînent une détérioration du rapport signal sur bruit du signal résultant WDR, sans pour autant réduire notablement cette non linéarité.

Il peut donc être souhaitable d'étendre la dynamique du signal d'image fourni par un capteur d'image de type CMOS en limitant davantage les dégradations de la qualité du signal d'image, notamment en ce qui concerne la linéarité du signal et le niveau de bruit.

Des modes de réalisation peuvent concerner un procédé de commande d'une cellule de pixel d'un capteur d'image de type CMOS, le procédé comprenant des étapes consistant à : initialiser un noeud de capture et un noeud de lecture de la cellule de pixel, transférer partiellement des charges électriques accumulées au noeud de capture depuis l'initialisation du noeud de capture, vers le noeud de lecture, évacuer totalement des charges électriques accumulées au noeud de lecture, transférer partiellement des charges électriques accumulées au noeud de capture, vers le noeud de lecture, et effectuer une première mesure des charges électriques accumulées au noeud de lecture pour obtenir une première tension de pixel correspondant à une quantité de charges électriques accumulées pendant une période d'intégration courte, et transférer totalement des charges électriques accumulées au noeud de capture, vers le noeud de lecture, et effectuer une seconde mesure des charges électriques au noeud de lecture pour obtenir une tension de pixel pour une période d'intégration longue. Selon un mode de réalisation, la seconde mesure est effectuée sans évacuation des charges électriques accumulées au noeud de lecture après la première mesure, la tension de pixel fournie à la seconde mesure correspondant ainsi à la somme des charges électriques accumulées pendant les périodes d'intégration courte et longue.

Selon un mode de réalisation, le procédé comprend des étapes de conversion analogique/numérique des première et seconde tensions de pixel, pour obtenir une première valeur d'éclairement de pixel correspondant à la première mesure et une seconde valeur d'éclairement de pixel correspondant à la seconde mesure.

Selon un mode de réalisation, le procédé comprend une étape de mesure de charges électriques au noeud de lecture pour obtenir une tension de référence de pixel, à la suite de l'étape d'évacuation totale des charges électriques accumulées au noeud de lecture, les conversions analogiques/numériques des première et seconde tensions de pixel étant initialisées à l'aide de la tension de référence de pixel.

Selon un mode de réalisation, dans lequel les transferts de charges électriques entre le noeud de capture et le noeud de lecture sont commandés par des impulsions dont l'amplitude est ajustée en fonction d'une dynamique d'un convertisseur analogique/numérique effectuant les conversions analogiques/numériques, afin d'éviter que ce dernier soit saturé lors des conversions analogiques, et afin que la première tension de pixel puisse atteindre une pleine dynamique du convertisseur analogique/numérique.

Selon un mode de réalisation, le procédé comprend une étape de fourniture d'une valeur d'éclairement de pixel résultante égale à la plus grande des quantités SL+SS et R x SS, SS étant la première valeur d'éclairement, SL+SS étant la seconde valeur d'éclairement, et R étant le rapport entre les périodes d'intégration longue et courte.

Selon un mode de réalisation, le procédé comprend une étape de fourniture d'une valeur d'éclairement de pixel résultante égale à la plus grande des quantités SL+SS + A x SS et R x SS, SS étant la première valeur d'éclairement, SL+SS étant la seconde valeur d'éclairement, A étant un coefficient et R étant le rapport entre les périodes d'intégration longue et courte.

Selon un mode de réalisation, le procédé comprend des étapes de comparaison de la première valeur d'éclairement à un seuil et de forçage de la première valeur d'éclairement à zéro avant d'être multipliée par le coefficient A, si elle est inférieure au seuil.

Selon un mode de réalisation, le coefficient A est ajusté en fonction des conditions de fabrication du capteur d'image.

Selon un mode de réalisation, le coefficient A est ajusté en temps réel en fonction de la température ambiante du capteur d'image.

Des modes de réalisations peuvent concerner également un capteur d'image de type CMOS comprenant des cellules de pixels arrangées en lignes de pixels et en colonnes de pixels transversales aux lignes de pixels, chaque cellule de pixel étant commandée par un circuit de commande de pixel et étant connectée à un circuit de traitement de signal de pixel, chaque cellule de pixel comprenant un noeud de capture connecté à un composant photosensible et un noeud de lecture relié au noeud de capture par l'intermédiaire d'un transistor, le noeud de lecture étant relié à une source d'alimentation de cellule de pixel par l'intermédiaire d'un transistor. Selon un mode de réalisation, chaque cellule de pixel est commandée par le circuit de commande conformément au procédé défini précédemment.

Selon un mode de réalisation, chaque cellule de pixel comprend un transistor commandé par le noeud de lecture et comportant une borne reliée à la source d'alimentation de la cellule de pixel et une borne connectée à un autre transistor commandé par un signal de sélection de pixel à lire et comportant une borne fournissant au circuit de traitement de signal de pixel un signal de pixel correspondant aux charges électriques se trouvant au noeud de lecture.

Des exemples de réalisation de l'invention seront décrits dans ce qui suit, à titre non limitatif en relation avec les figures jointes parmi lesquelles :

la figure 1 décrite précédemment représente schématiquement un capteur d'image de type CMOS et une cellule de pixel,

la figure 2 décrite précédemment représente des chronogrammes illustrant un mode de commande d'une cellule de pixel du capteur d'image,

la figure 3 décrite précédemment représente des chronogrammes illustrant un autre mode de commande de la cellule de pixel,

la figure 4 décrite précédemment représente des courbes illustrant une caractéristique de conversion photoélectrique du capteur d'image,

la figure 5 représente des chronogrammes illustrant un mode de commande de la cellule de pixel de la figure 1, selon un mode de réalisation,

la figure 6 représente un circuit de calcul d'un signal de pixel, selon un mode de réalisation,

la figure 7 représente une courbe de variation du signal de pixel en sortie du circuit de la figure 6 en fonction de l'intensité d'éclairement de la cellule de pixel,

la figure 8 représente une courbe de variation d'un écart entre la courbe de la figure 7 et une droite correspondant à une courbe de réponse linéaire du capteur d'image,

la figure 9 représente un circuit de calcul d'un signal de pixel, selon un autre mode de réalisation,

la figure 10 représente une courbe de variation du signal de pixel en sortie du circuit de la figure 9 en fonction de l'intensité d'éclairement de la cellule de pixel,

la figure 11 représente une courbe de variation d'un écart entre la courbe de la figure 10 et une droite correspondant à une courbe de réponse linéaire du capteur d'image,

la figure 12 représente un circuit de calcul d'un signal de pixel, selon un autre mode de réalisation.

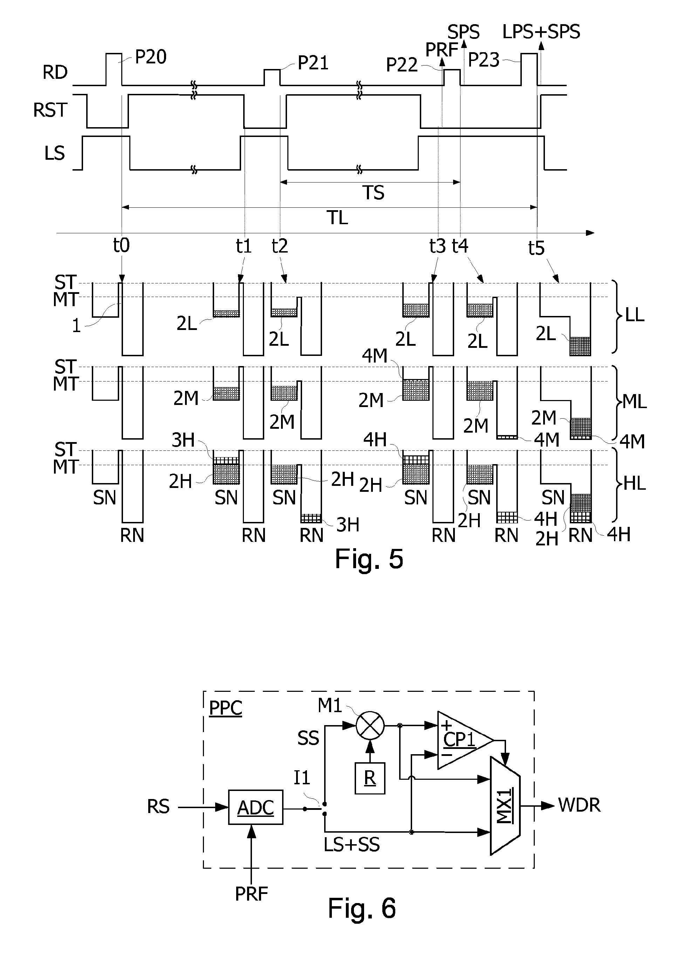

La figure 5 représente des chronogrammes des signaux de commande RD, RST et LS appliqués à chaque cellule de pixel PXL telle que représentée sur la figure 1, selon un mode de réalisation. La figure 5 représente également les charges accumulées aux noeuds de capture SN et de lecture RN à différents instants et pour une faible LL, moyenne ML et forte HL intensité d'éclairement de la photodiode PD.

Sur la figure 5, la commande d'une cellule de pixel PXL telle que celle représentée sur la figure 1 comprend six instants particuliers successifs t0, t1, t2, t3, t4, et t5 dans un mode de dynamique étendue. Avant l'instant t0, le noeud de lecture RN est initialisé en évacuant les charges électriques au noeud RN vers la source d'alimentation PXS par le passage à l'état passant du transistor T2 commandé en mettant le signal RST à 1. Pendant que le transistor T2 est passant, les charges électriques accumulées par la photodiode PD au noeud de capture SN sont également transférées vers le noeud de lecture RN sous l'effet d'une impulsion P20 du signal RD commandant le transistor T1 à l'état passant. A l'instant t0, le signal RD passe à 0, bloquant le transistor T1, et le noeud de capture SN est vide de charges électriques. L'instant t0 marque ainsi le début d'une période d'intégration longue TL pendant laquelle la photodiode PD peut accumuler des charges électriques 2L, 2M, 2H, 3H, 4M, 4H sous l'effet de la lumière. A l'instant t1, le signal RST est mis à 0 juste avant l'apparition d'une impulsion P21 dans le signal RD. L'impulsion P21 présente une intensité inférieure à l'impulsion P20, par exemple de l'ordre de la moitié de l'intensité de l'impulsion P20, de manière à abaisser partiellement la barrière 1 formée par le transistor T1, et ainsi à ne transférer du noeud de capture SN vers le noeud de lecture RN que des charges électriques 3H excédant un certain seuil MT. Le seuil MT est ainsi défini par l'intensité de l'impulsion P21. Ainsi, sous éclairement faible LL ou moyen ML, les charges électriques accumulées par la photodiode PD au noeud de capture SN n'excèdent pas le seuil MT et donc aucune charge électrique n'est transférée vers le noeud de lecture RN. Sous un fort éclairement HL, les charges électriques 3H excédant le seuil MT sont transférées vers le noeud RN. Le signal RD repasse à 0 après l'impulsion P21 à l'instant t2. L'instant t2 marque le début d'une période d'intégration courte TS. Juste après l'instant t2, le signal RST est mis à 1 pour initialiser le noeud de lecture, c'est-à-dire évacuer les charges électriques 3H se trouvant au noeud RN vers l'alimentation VPX. L'impulsion P21 permet donc d'effectuer une opération d'écrêtage (skimming) de charges électriques en excès 3H accumulées au noeud SN. Viens ensuite une phase de lecture au cours de laquelle le signal LS passe à 1, puis le signal RST passe à 0. Durant la phase de lecture, à l'instant t3 juste après le passage à 0 du signal RST, une lecture de la tension du signal de pixel RS est effectuée pour disposer d'une tension de référence PRF correspondant à une absence d'éclairage de la diode PD. La tension PRF est utilisée pour initialiser un convertisseur analogique/numérique fournissant des échantillons numérisés du signal d'image. La lecture de la tension PRF est suivie d'une impulsion P22 du signal RD ayant une intensité analogue à celle de l'impulsion P21, permettant de transférer le cas échéant des charges électriques 4M, 4H excédant le seuil MT au noeud SN vers le noeud RN. L'instant t4 se produisant à la suite de l'émission de l'impulsion P22, marque la fin de la période d'intégration courte TS et l'instant de lecture de la tension du signal RS. Sous un faible éclairement LL, aucune charge électrique n'est transférée du noeud SN vers le noeud RN. Sous un éclairement moyen ML, une petite quantité de charges électriques 4M est transférée vers le noeud RN. Sous un fort éclairement HL, une quantité plus importante de charges électriques 4H est transférée vers le noeud RN. A l'instant t4, la lecture du signal RS fournit un signal de pixel dit "court" SPS correspondant aux charges électriques 4M, 4H transférées au noeud RN.

Selon un mode de réalisation, la phase de lecture se termine par une impulsion P23 apparaissant à l'instant t5 dans le signal RD, puis par la remontée du signal RST et le passage à 0 du signal LS. L'impulsion P23 présente une intensité analogue à celle de l'impulsion P20, pour transférer toutes les charges électriques présentes au noeud SN vers le noeud RN. L'instant t5 marque la fin de la période d'intégration longue TL et est suivi par la lecture de la tension du signal RS en sortie de la cellule de pixel PXL. La lecture de la tension RS fournit un signal correspondant à la somme des charges électriques 2L, 2M, 2H accumulées durant la période d'intégration longue TL et des charges électriques 4M, 4H accumulées durant la période d'intégration courte TS, c'est-à-dire un signal de pixel dit "long" LPS additionné au signal de pixel court SPS. En effet, le noeud de lecture RN n'est pas initialisé par le passage à 1 du signal RST entre la fin de la période TS et la fin de la période TL. Les charges électriques 4M, 4H correspondant au signal de pixel court n'ont donc pas été évacuées avant le transfert de toutes les charges électriques présentes au noeud SN vers le noeud RN, et avant la lecture du signal de pixel long. Cette disposition permet d'éviter une réinitialisation du convertisseur analogique/numérique durant la phase de lecture des valeurs de pixel courte et longue et donc évite d'avoir à lire deux fois la tension de référence du pixel correspondant à une absence d'éclairement de la diode PD. Environ 20% du temps de lecture d'un pixel est ainsi économisé. Il s'avère que cette disposition permet également d'obtenir un bruit résultant dans la valeur cumulée de pixel longue et courte SPS+LPS bien moindre qu'en procédant à deux lectures indépendantes des signaux de pixel court SPS et long LPS. En effet, le transfert partiel de charges électriques entre le noeud de capture SN et le noeud de lecture, notamment entre les instants t3 et t4, induit un bruit thermique en kTC résultant de la présence d'une résistance et d'une capacité C intrinsèques à chaque noeud de capture et de lecture, k étant la constante de Boltzmann et T étant la température ambiante. Le fait de ne pas réinitialiser le noeud de lecture RN entre la lecture du signal SPS et la lecture du signal SPS+LPS permet d'éviter toute perte de charge électrique et donc une compensation du bruit thermique généré par les transferts de charges électriques au travers du transistor T1, entre les instants t3 et t5.

Il est à noter que le signal RST reste à 1 durant les périodes où le signal LS est à 0, c'est-à-dire durant les périodes où le pixel n'est pas sélectionné pour effectuer une lecture. Cette disposition permet d'éviter que des charges électriques susceptibles d'apparaître par diffusion électronique au noeud de lecture, notamment en raison d'une forte lumière d'éclairement, ne soient prises en compte dans le signal de pixel.

L'intensité des impulsions P21, P22 du signal RD, commandant les transferts partiels de charges électriques aux instants t2 et t3, peut être ajustée en fonction de la dynamique du convertisseur analogique/numérique, de manière à éviter la saturation de ce dernier lors du traitement des signaux SPS et LPS+SPS, et à ce que le signal de pixel court SPS puisse atteindre la pleine dynamique du convertisseur analogique/numérique.

La figure 6 représente un circuit de traitement PPC du signal RS en sortie d'une cellule de pixel PXS, selon un mode de réalisation. Le circuit PPC comprend un convertisseur analogique/numérique ADC, un commutateur 11, un multiplieur M1, un comparateur CP1 et un multiplexeur MX1. Le convertisseur ADC reçoit les signaux de pixel SPS, SPS+LPS lus à la fin de chaque période d'intégration TL, TS, ainsi que la tension de pixel de référence PRF permettant d'établir une correspondance entre un éclairement nul de la cellule de pixel PXS et une tension de signal de pixel. La sortie du convertisseur ADC est connectée au commutateur I1 qui comprend une borne connectée à une entrée du multiplexeur MX1 et du comparateur CP1, et une borne connectée au multiplieur M1. Le commutateur I1 permet d'envoyer vers le multiplexeur MX1 et le comparateur CP1, le signal LS+SS correspondant à la numérisation par le convertisseur ADC du signal LPS+SPS en sortie d'une cellule de pixel PXS à l'instant t5 (figure 5), et vers le multiplieur M1 le signal SS correspondant à la numérisation du signal SPS en sortie de la cellule PXS à l'instant t4. Le multiplieur M1 reçoit sur une autre entrée une valeur R égale au rapport entre les durées d'intégration longue et courte (= TL / TS). La sortie du multiplieur M1 est connectée à une entrée du comparateur CP1 et une entrée du multiplexeur MX1. La sortie du comparateur CP1 commande le multiplexeur MX1, de manière à ce que ce dernier fournisse à une sortie de signal de pixel WDR du circuit PPC la plus grande valeur parmi les valeurs d'entrée du multiplexeur MX1. Ainsi, le circuit PPC fournit une valeur de pixel WDR calculée de la manière suivante :

$$WDR = MAX(LS + SS, R \times SS) \qquad (2)$$

Le ratio R entre les durées d'intégration longue TL et courte TS peut être ajustable par exemple à 1, 4 ou 8 en fonction de l'importance du contraste de l'image fournie par le capteur d'image, sachant que la qualité d'une image fournie par le capteur d'image a tendance à diminuer lorsque le ratio R augmente. Lorsque le ratio R est fixé à 1 (pour une image faiblement contrastée), la cellule de pixel est commandée conformément au mode de commande illustré par la figure 2, c'est-à-dire en mettant en oeuvre une seule période d'intégration EXT. La durée des périodes d'intégration TL et TS est également ajustée en fonction de la quantité de lumière reçue par le capteur d'image, en maintenant le ratio R à la valeur choisie.

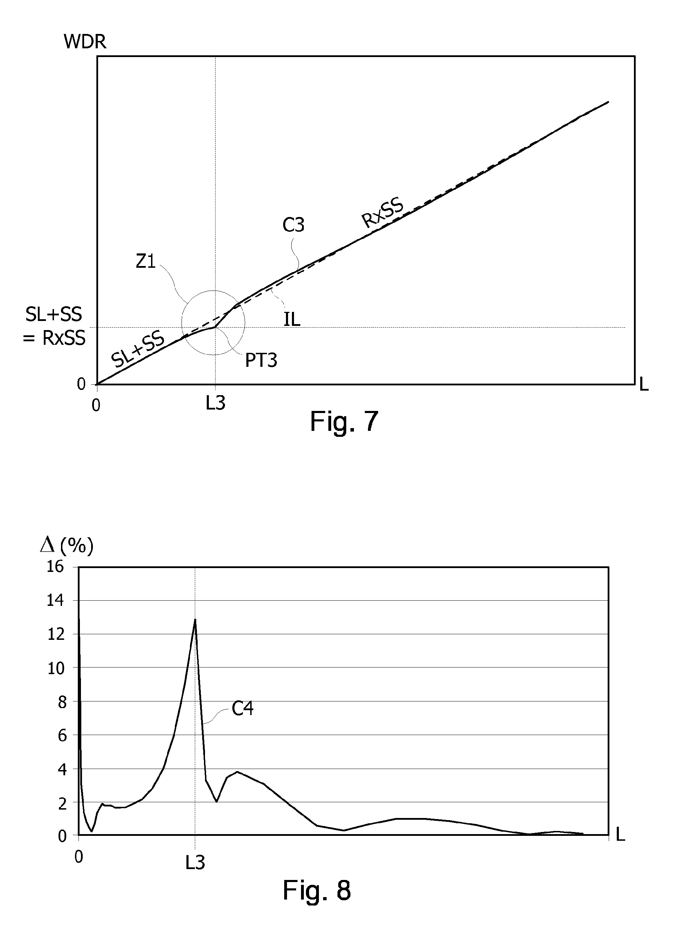

La figure 7 représente une courbe de réponse C3 du circuit de cellule de pixel PXS couplé au circuit de traitement PPC, en fonction de l'intensité d'éclairement L de la cellule de pixel PXS. La figure 7 montre que la courbe C3 coïncide sensiblement avec une droite IL dans une plage relativement étendue, à l'exception d'une zone de non linéarité Z1 où la courbe C3 n'est pas linéaire. La zone Z1 englobe un point de jonction PT3 entre des courbes de réponse correspondant aux équations WDR = LS + SS et WDR = R x SS. Le point PT3 est atteint lorsque l'intensité d'éclairement de la cellule de pixel est égale à une valeur L3.

La figure 8 représente une courbe C4 de variation de l'écart entre la courbe C3 et la droite IL. La figure 8 montre qu'à l'exception de la zone Z1 de la figure 7, dans laquelle se trouve un pic à environ 13% atteint lorsque l'intensité d'éclairement est égale à L3, l'écart entre la courbe C3 et la droite IL reste inférieur à 4%.

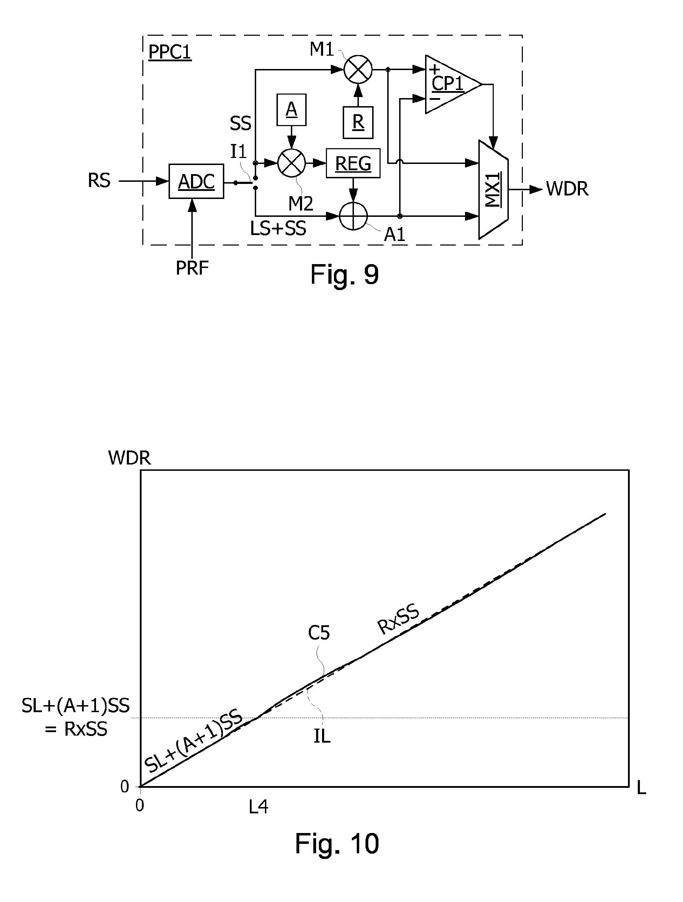

La figure 9 représente un circuit de traitement PPC1 du signal RS en sortie d'une cellule de pixel PXS, selon un autre mode de réalisation. Le circuit PPC1 diffère du circuit PPC en ce qu'il comprend un additionneur A1 interposé entre le commutateur I1 et le multiplexeur MX1 ou le comparateur CP1, un multiplieur M2 et un registre REG. Ainsi, le commutateur I1 comprend une sortie connectée à l'additionneur A1 et une sortie connectée aux multiplieurs M1, M2. Le commutateur I1 permet d'envoyer vers l'additionneur A1 le signal LS+SS correspondant à la numérisation par le convertisseur ADC du signal LPS+SPS en sortie d'une cellule de pixel PXS à l'instant t5 (figure 5), et vers les multiplieurs M1, M2 le signal SS correspondant à la numérisation du signal SPS en sortie de la cellule PXS à l'instant t4. Le multiplieur M2 reçoit sur une autre entrée la valeur d'un coefficient A et fournit la valeur A x SS à l'entrée du registre REG. Le registre REG permet ainsi de stocker la valeur A x SS avant que la valeur LS+SS soit disponible à la fin de la période d'intégration longue TL. La sortie de l'additionneur A1 est connectée à une entrée du multiplexeur MX1 et à une entrée du comparateur CP1. La sortie du comparateur CP1 commande le multiplexeur MX1, de manière à ce qu'il fournisse en sortie WDR du circuit PPC1 la plus grande valeur parmi les valeurs d'entrée du multiplexeur MX1. Ainsi, le circuit PPC1 fournit une valeur de pixel WDR donnée par la formule suivante :

$$WDR = MAX(LS + SS + A \times SS , R \times SS) \qquad (3)$$

Il est à noter que le circuit PPC1 correspond au circuit PPC lorsque le coefficient A est choisi égal à 0.

La figure 10 représente une courbe de réponse C5 du circuit de cellule de pixel PXS couplé au circuit de traitement PPC1, en fonction de l'éclairement L de la cellule de pixel, lorsque le coefficient A présente une valeur optimum comprise entre 1 et 4, et en particulier entre 2 et 3. La figure 10 montre que la courbe C5 suit sensiblement la droite IL dans toute la dynamique étendue de sensibilité de la cellule de pixel, y compris au voisinage du point de jonction entre les courbes correspondant aux équations WDR = SL+(A+1)SS et WDR = R x SS, ce point étant atteint lorsque la cellule de pixel est soumise à une intensité lumineuse égale à L4.

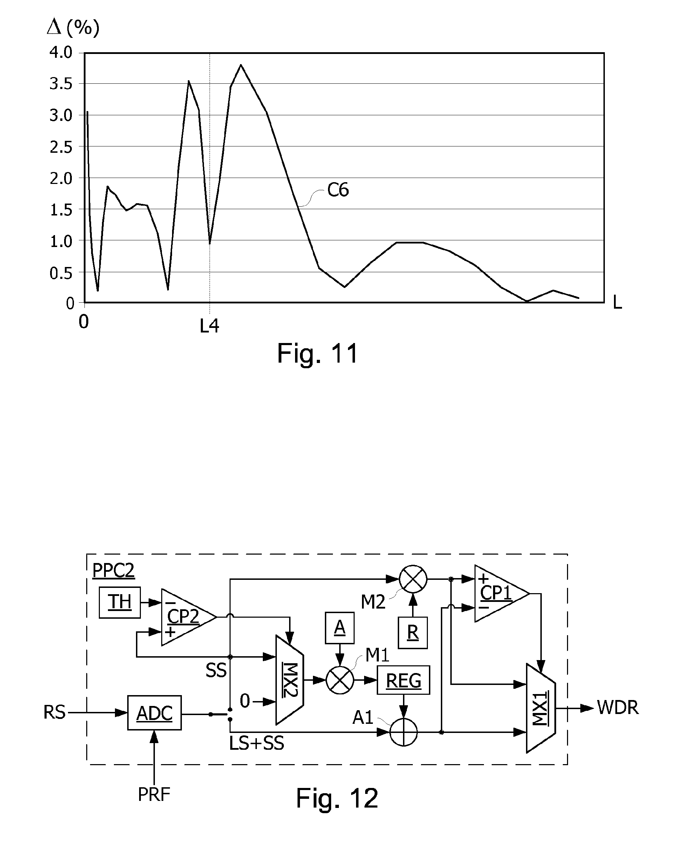

La figure 11 représente une courbe C6 de variation de l'écart entre la courbe C5 et la droite IL. La figure 11 fait apparaître que cet écart reste inférieur à 4% même lorsque l'intensité d'éclairement de la cellule de pixel est voisine de L4. Il est à noter que les valeurs numériques indiquées dans les figures 8 et 11 dépendent d'une manière importante de la technologie de réalisation du pixel. Ces valeurs numériques ne sont donc fournies qu'à titre d'exemple pour permettre des comparaisons entre les modes de réalisation.

La valeur du coefficient A peut être ajustée à l'issue de tests réalisés en fin de fabrication du capteur d'image, en fonction des performances du capteur d'image qui varient en fonction des conditions de fabrication de celui-ci. La valeur du coefficient A peut également être ajustée en temps réel en fonction de la température ambiante du capteur d'image pour compenser des variations de performances résultant de variations de la température ambiante de fonctionnement du capteur d'image.

La figure 12 représente un circuit de traitement PPC2 du signal RS en sortie d'une cellule de pixel PXS, selon un autre mode de réalisation. Le circuit PPC2 diffère du circuit PPC1 en ce que le terme A x SS de l'équation (3) est forcé à 0 lorsque le signal SS est inférieur à une valeur de seuil TH, avant d'être multiplié par le coefficient A. De cette manière, on évite d'ajouter du bruit au signal résultant WDR lorsque la cellule de pixel reçoit une faible intensité lumineuse. Ainsi, par rapport au circuit PPC1, le circuit PPC2 comprend en outre un registre mémorisant le seuil TH, un comparateur CP2 et un multiplexeur MX2. Le comparateur CP2 compare le signal SS à la valeur de seuil. Le multiplexeur reçoit en entrée le signal SS et un signal nul. Le signal de sortie du comparateur CP2 commande le multiplexeur MX2 dont la sortie est connectée à l'entrée du multiplieur M1. Ainsi, le registre REG reçoit soit une valeur nulle lorsque le signal SS est inférieur au seuil TH, soit la valeur A x SS dans le cas contraire.

Il apparaîtra clairement à l'homme de l'art que la présente invention est susceptible de diverses variantes de réalisation et diverses applications. En particulier, l'invention n'est pas limitée à la cellule de pixel représentée sur la figure 1. L'invention peut s'appliquer à d'autres cellules de pixel telles qu'une cellule de pixel dans laquelle certains transistors à canal n ont été remplacés par un transistor à canal p. Il importe simplement que la cellule de pixel comprenne un noeud de capture dans lequel des charges électriques peuvent s'accumuler sous l'effet de la lumière, et un noeud de lecture relié au noeud de capture par un composant qui peut être commandé pour transférer à des instants choisis tout ou partie des charges électriques accumulées au noeud de capture, et que la cellule de pixel comprenne également un composant qui peut être commandé pour initialiser le noeud de lecture, c'est-à-dire évacuer les charges électriques accumulées au noeud de lecture, ainsi qu'un circuit de lecture configuré pour fournir une tension proportionnelle à la quantité de charges électriques au noeud de lecture.

**Revendications**

1. Procédé de commande d'une cellule de pixel (PXL) d'un capteur d'image (IS) de type CMOS, le procédé comprenant des étapes consistant à:

   initialiser un noeud de capture (SN) et un noeud de lecture (RN) de la cellule de pixel,
   transférer partiellement des charges électriques accumulées au noeud de capture depuis l'initialisation du noeud de capture, vers le noeud de lecture,
   évacuer totalement des charges électriques accumulées au noeud de lecture,
   transférer partiellement des charges électriques accumulées au noeud de capture, vers le noeud de lecture, et effectuer une première mesure des charges électriques accumulées au noeud de lecture pour obtenir une première tension de pixel (SPS) correspondant à une quantité de charges électriques accumulées pendant une période d'intégration courte (TS), et
   transférer totalement des charges électriques accumulées au noeud de capture, vers le noeud de lecture, et effectuer une seconde mesure des charges électriques au noeud de lecture pour obtenir une tension de pixel (LPS) pour une période d'intégration longue (TL),
   **caractérisé en ce que** la seconde mesure est effectuée sans évacuation des charges électriques accumulées au noeud de lecture (RN) après la première mesure, la tension de pixel (LPS+SPS) fournie à la seconde mesure correspondant ainsi à la somme des charges électriques accumulées pendant les périodes d'intégration courte (TS) et longue (TL).

2. Procédé selon la revendication 1, comprenant des étapes de conversion analogique/numérique des première et seconde tensions de pixel (SPS, LPS+SPS), pour obtenir une première valeur d'éclairement de pixel (SS) correspondant à la première mesure et une seconde valeur d'éclairement de pixel (LS+SS) correspondant à la seconde mesure.

3. Procédé selon la revendication 2, comprenant une étape de mesure de charges électriques au noeud de lecture pour obtenir une tension de référence de pixel (PRF), à la suite de l'étape d'évacuation totale des charges électriques accumulées au noeud de lecture (SN), les conversions analogiques/numériques des première et seconde tensions de pixel (SPS, LPS+SPS) étant initialisées à l'aide de la tension de référence de pixel (PRF).

4. Procédé selon la revendication 2 ou 3, dans lequel les transferts de charges électriques entre le noeud de capture (SN) et le noeud de lecture (RN) sont commandés par des impulsions dont l'amplitude est ajustée en fonction d'une dynamique d'un convertisseur analogique/numérique (ADC) effectuant les conversions analogiques/numériques, afin d'éviter que ce dernier soit saturé lors des conversions analogiques, et afin que la première tension de pixel (SPS) puisse atteindre une pleine dynamique du convertisseur analogique/numérique.

5. Procédé selon l'une des revendications 2 à 4, comprenant une étape de fourniture d'une valeur d'éclairement de pixel résultante (WDR) égale à la plus grande des quantités SL+SS et R x SS, SS étant la première valeur d'éclairement, SL+SS étant la seconde valeur d'éclairement, et R étant le rapport entre les périodes d'intégration longue (TL) et courte (TS).

6. Procédé selon l'une des revendications 2 à 4, comprenant une étape de fourniture d'une valeur d'éclairement de pixel résultante (WDR) égale à la plus grande des quantités SL+SS + A x SS et R x SS, SS étant la première valeur d'éclairement, SL+SS étant la seconde valeur d'éclairement, A étant un coefficient et R étant le rapport entre les périodes d'intégration longue (TL) et courte (TS).

7. Procédé selon la revendication 6, comprenant des étapes de comparaison de la première valeur d'éclairement (SS) à un seuil (TH) et de forçage de la première valeur d'éclairement à zéro avant d'être multipliée par le coefficient A, si elle est inférieure au seuil.

8. Procédé selon la revendication 7, dans lequel le coefficient A est ajusté en fonction des conditions de fabrication du capteur d'image.

9. Procédé selon l'une des revendications 6 à 8, dans lequel le coefficient A est ajusté en temps réel en fonction de la température ambiante du capteur d'image (IS).

10. Capteur d'image de type CMOS comprenant des cellules de pixels arrangées en lignes de pixels et en colonnes de pixels transversales aux lignes de pixels, chaque cellule de pixel (PXL) étant commandée par un circuit de commande de pixel (CTLC) et étant connectée à un circuit de traitement de signal de pixel (PPC), chaque cellule de pixel comprenant un noeud de capture (SN) connecté à un composant photosensible (PD) et un noeud de lecture (RN) relié au noeud de capture par l'intermédiaire d'un transistor (T1), le noeud de lecture étant relié à une source d'alimentation de cellule de pixel (VPX) par l'intermédiaire d'un transistor (T2), **caractérisé en ce que** chaque cellule de pixel est commandée par le circuit de commande (CTLC) conformément au procédé selon l'une des revendications 1 à 9.

11. Capteur d'image selon la revendication 10, dans lequel chaque cellule de pixel (PXL) comprend un transistor (T3) commandé par le noeud de lecture (RN) et comportant une borne reliée à la source d'alimentation de la cellule de pixel (VXL) et une borne connectée à un autre transistor (T4) commandé par un signal de sélection de pixel à lire (LS) et comportant une borne fournissant au circuit de traitement de signal de pixel (PPC) un signal de pixel (RS) correspondant aux charges électriques se trouvant au noeud de lecture.

Fig. 1

Fig. 2

Fig. 3

Fig. 4

Fig. 5

Fig. 6

WDR

Z1

C3

RxSS

SL+SS
= RxSS

SL+SS

IL

PT3

0

0          L3          L

**Fig. 7**

Δ (%)

16
14
12
10
8
6
4
2
0

C4

0          L3          L

**Fig. 8**

Fig. 9

Fig. 10

Fig. 11

Fig. 12

Europäisches
Patentamt

European
Patent Office

Office européen
des brevets

**RAPPORT DE RECHERCHE EUROPEENNE**

Numéro de la demande

EP 11 15 6874

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br><br>Y<br>A | US 2008/258045 A1 (OIKE YUSUKE [JP] ET AL) 23 octobre 2008 (2008-10-23)<br>* alinéas [0010] - [0015], [0097] - [0101] *<br>* alinéas [0111], [0178] - [0179], [0183] *<br>* figures 1,4B,6,40,41 *<br>----- | 1-3,10, 11<br><br>5-8<br>4 | INV.<br>H04N5/335<br>H04N5/235<br>H04N3/15 |
| Y<br><br>A | US 7 586 523 B2 (EGAWA YOSHITAKA [JP] ET AL) 8 septembre 2009 (2009-09-08)<br>* colonne 8, ligne 57 - colonne 9, ligne 15 *<br>* colonne 10, ligne 7-35 *<br>----- | 5-8<br><br>9 | |
| A | DIRK HERTEL ET AL: "An adaptive multiple-reset CMOS wide dynamic range imager for automotive vision applications",<br>INTELLIGENT VEHICLES SYMPOSIUM, 2008 IEEE, IEEE, PISCATAWAY, NJ, USA,<br>4 juin 2008 (2008-06-04), pages 614-619, XP031318857,<br>ISBN: 978-1-4244-2568-6<br>* alinéa [IIIB] *<br>----- | 1,10 | |

DOMAINES TECHNIQUES RECHERCHES (IPC)

H04N

Le présent rapport a été établi pour toutes les revendications

| Lieu de la recherche | Date d'achèvement de la recherche | Examinateur |
|---|---|---|
| La Haye | 16 juin 2011 | Ogor, Mariëlle |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 15 6874

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-06-2011

| Document brevet cité au rapport de recherche | Date de publication | Membre(s) de la famille de brevet(s) | Date de publication |
|---|---|---|---|
| US 2008258045 A1 | 23-10-2008 | AUCUN | |
| US 7586523 B2 | 08-09-2009 | CN 1956506 A | 02-05-2007 |
| | | JP 4649313 B2 | 09-03-2011 |
| | | JP 2007124400 A | 17-05-2007 |
| | | KR 20070045995 A | 02-05-2007 |
| | | US 2007097240 A1 | 03-05-2007 |

EPO FORM P0460

Pour tout renseignement concernant cette annexe : voir Journal Officiel de l'Office européen des brevets, No.12/82

**EP 2 383 980 A1**

## RÉFÉRENCES CITÉES DANS LA DESCRIPTION

**Documents brevets cités dans la description**

- US 7586523 B